# EUROPEAN PATENT APPLICATION

(11) **EP 4 156 447 A1**
(43) Date of publication of application: **29.03.2023**
(21) Application number: 22190048.3
(22) Date of filing: 11.08.2022
(51) Int. Cl.: H02J 7/00, G06F 1/26

(54) **APPARATUS AND METHOD FOR ISOLATING AND DISCHARGING A BATTERY**

(30) Priority: 24.09.2021 US 202117484323
(71) Applicant: INTEL Corporation, Santa Clara, CA 95054 (US)
(72) Inventor: RAJAGOPAL, Pannerkumar, KA 560035 Bangalore (IN); SELVARAJ, Siddhartha, TN 641041 Coimbatore (IN); KANNAN, Devanathan, KA 560103 Bangalore (IN)
(74) Representative: HGF

(57) **Abstract**

A chassis structure of an apparatus contains a battery. Charger circuitry is operable to provide charge to the battery. Discharge circuitry is operable to receive charge from the battery. Switch circuitry is coupled between the battery and each of the charger circuitry, the discharge circuitry, and a load. A connector at an exterior surface of the chassis couples the apparatus to a power supply. The switch circuitry is coupled to the connector via the charger circuitry. A first control activable at the exterior surface of the chassis structure is operable to generate, in response to being activated, a first control signal to request a first switch state wherein the battery is electrically coupled to the discharge circuitry. A controller circuit coupled to receive the first control signal from the first control and, based on the first control signal, to operate the switch circuitry to provide the first switch state.

## Description

### BACKGROUND

Computer devices, such as laptops and smartphones, often have non-removable batteries. If the user needs to access the battery, the computer needs to be taken or shipped to a service center, such as a company's "help desk" or an authorized service of the manufacturer.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
**FIG. 1** illustrates some components of a computing system having a capability to isolate and discharge a battery in accordance with some embodiments.
**FIG. 2** illustrates a flow diagram of a process for discharging a battery according to various embodiments.
**FIG. 3** illustrates a flow diagram of a process for isolating a battery according to various embodiments.
**FIG. 4** illustrates a smart device or a computer system or an SoC (System-on-Chip) with a capability to isolate and discharge a battery in accordance with some embodiments.

### DETAILED DESCRIPTION

While computer devices with non-removable batteries have advantages, they sometimes prevent a user from determining whether the battery is a possible source of a problem with the device. In some circumstances, a computer device will not boot due to a malfunctioning battery. In some situations, discharging the malfunctioning battery to a fully discharged state resolves the issue with the battery. In this case, the battery can subsequently be recharged and the computer device can be used. However, sometimes discharging a malfunctioning battery to a fully discharged state does not resolve the issue. In this case, the computer device may not boot so long as the malfunctioning battery remains connected to the system. If the battery can be isolated from the computer device, the computer device can be connected to an externally provided power source, booted, and used.

Embodiments of the invention relate generally to power delivery in a computer system and more particularly, but not exclusively, to isolating a battery, discharging a battery, and a battery maintenance operation.

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of' or "one or more of' can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Various embodiments are described with reference to a computer device having an integral battery that is not readily removable or replaceable by a user, or a computer device for which special tools are needed to access the battery. It should be appreciated, however, that the present disclosure is not limited to computers with non-removable batteries. The present disclosure contemplates embodiments in which a computer device includes any type of battery.

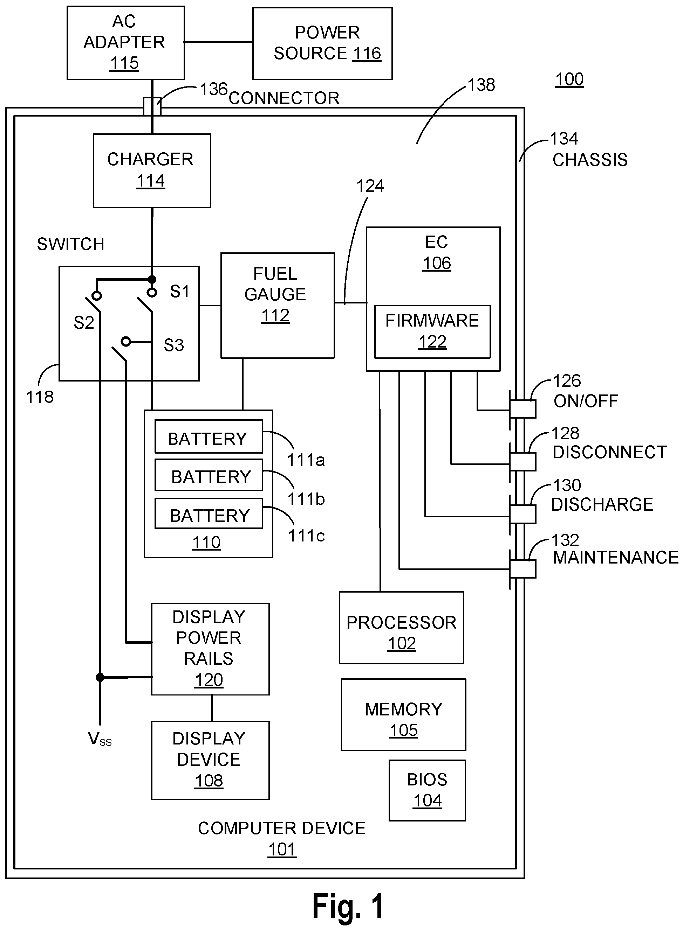

**FIG. 1** illustrates a computer system 100 having a capability to isolate and discharge a battery in accordance with some embodiments. Computer system 100 comprises a computing device 101 comprising a processor 102, Basic Input/Output System (BIOS) 104, memory 105, embedded controller circuitry (EC) 106, display device 108, a battery 110, and chassis structure 134. BIOS 104 is firmware which runs on the Processor 102. BIOS 104 is typically stored in SPI flash memory (not shown). BIOS 104 is responsible for booting up computer device 101. During boot, BIOS 104 is copied to a volatile memory and runs from there.

Embedded controller circuitry 106 can be a microcontroller that handles various system tasks that an operating system or the processer does not handle. In various embodiments, a dedicated onboard microcontroller helps provide a capability to isolate and discharge a battery. However, in some embodiments, these capabilities may be implemented without using EC 106. In some embodiments, EC 106 is a Power Management Unit (PMU) or a Power Management Integrated Circuit (PMIC). In some embodiments, EC 106 includes firmware 122. Firmware 122 may include machine-readable instructions that allow the EC 106 to perform operations that are part of a process to isolate or discharge a battery, or perform a battery maintenance operation. In some embodiments, some or all of the processes required to provide capabilities to isolate or discharge a battery, or perform a battery maintenance operation, may be provided by software running on processor 102.

In some embodiments, battery 110 is a battery pack comprising two or more batteries, e.g., batteries 111a, 111b, 111c. In some embodiments, battery 110 is an integral part of computer device 101 that is not readily removable or replaceable by a user. In some embodiments, battery 110 is disposed inside chassis 134 that is difficult for a user to open or which requires a special tool or tools to open.

While shown within chassis structure 134, in some embodiments, display device 108 is external to chassis structure 134. For example, in some embodiments, display device 108 is integral with the lid of a laptop computer. As another example, display device 108 is a peripheral device separate from and coupled with computer device 101 via a cable. In some embodiments, display device 108 is an integral component of chassis structure 134. For example, in some embodiments, display device 108 is part of the exterior of a cellular or smart phone display. In some embodiments, display device 108 comprises two or more display devices.

Computer device 101 also comprises fuel gauge 112, charger circuitry 114, AC adapter 115, switch circuitry 118, display power rails 120, controls 126, 128, 130, and 132, and connector 136. In various embodiments, fuel gauge 112 is a device or circuit that monitors, estimates, or determines one or more parameters of battery 110. In various embodiments, fuel gauge 112 is a device or circuit that sets one or more parameters of battery 110. In various embodiments, fuel gauge 112 is a device or circuit that controls switch circuitry 118. In various embodiments, fuel gauge 112 is distinct logic or a dedicated controller circuitry. In some embodiments, processor 102 or EC 106 may perform one or more functions of fuel gauge 112 that are part of a process to isolate or discharge a battery. EC 106 communicates with fuel gauge 112 using bus 124, which may be an SMBUS/I2C bus in some embodiments.

Power source 116 is an alternating current (AC) power source, e.g., a wall outlet, and AC adapter 115 may comprise an AC-DC converter. AC adapter 115 is typically located external to chassis 134. External power source 116 is connected via AC adapter 115 to switch circuitry 118 within chassis structure 134 via connector 136 and charger circuitry 114. Connector 136 is disposed at an exterior surface of the chassis structure 134. Connector 136 may be any suitable type of electrical connector or jack (type C or AC). Charger circuitry 114 comprises circuitry to convert power provided by AC adapter 115 to appropriate voltage levels required by various components of computer device 101. In some embodiments, charger circuitry 114 generates a regulated output supply voltage and comprises direct current-to-direct current (DC-DC) conversion circuitry. Any suitable DC-DC converter may be used.

In various embodiments, switch circuitry 118 (also referred to herein as switch device) comprises a plurality of power field effect transistors (FETs), conceptually represented in the figure as switches S1, S2, and S3. FETs (or switches) S1, S2, and S3 may be opened and closed such that power from charger 114 may be provided to regulated supply voltage to supply voltage Vss, battery 110, or both. In addition, switches S1, S2, and S3 may be opened and closed to disconnect or discharge battery 110. Supply voltage Vss may be distributed to various components of the computer device 101, such as processor 102, memory 105, EC 106, fuel gauge 112, and display device 108. The various components of the computer device 101 that supply voltage Vss may be distributed to may be referred to herein collectively as a "load." In various embodiments, switches S1, S2, and S3 may be controlled to provide "switch states," in which the battery supplies power, the battery is isolated, and the battery is discharged, as set forth in Table 1.

**Table 1**

| | S1 | S2 | S3 |
|---|---|---|---|
| BATTERY DISCHARGE | Open | Close | Close |
| BATTERY ISOLATED | Open | Close | Open |
| BATTERY POWER | Close | Close | Open |

As seen from Table 1, in a first switch state (battery discharge), battery 110 is electrically coupled to discharge circuitry. In the first switch state, battery 110 can be discharged by opening switch S1 and closing switch S3, which connects battery with discharge circuitry, e.g., display device 108. When battery 110 is being discharged, power can be provided to one or more components of computer device 101 from charger circuitry, e.g., charger 114, by closing switch S2.

In a second switch state (battery isolated), battery 110 is isolated from the components of the computer device 101. In the second switch state, switches S1 and S3 are opened. When battery 110 is isolated, power can be provided from an external power source via AC adapter 115, connector 136, and charger 114 to a load within the computer device 101 by closing switch S2.

In another switch state (battery power), battery 110 and the external power source 116 (if connected to connector 136 via AC adapter 115) supply power to a load, e.g., various components of the computer device 101, via supply voltage Vss, when switches S1 and S2 are closed, and S3 is opened.

Display power rails 120 provide power to display device 108. During normal operation of computer device 101, display power rails 120 receive power from supply voltage Vss. However, in the first switch state, when battery 110 is being discharged, display power rails 120 are configured such that power is not received from supply voltage Vss. When battery 110 is being discharged (first switch state), display power rails 120, and in turn display device 108, only receive charge from battery 110.

Computer device 101 comprises controls 126-132 that are disposed in or on a wall of chassis 134 in such a way that the controls may be activated by a user. In various embodiments, controls 126-132 are disposed at an external surface of chassis structure 134. In various embodiments, controls 126-132 can be accessed or activated outside of chassis structure 134. For example, any of accessible or activable controls 126-132 can be activated outside the chassis structure without requiring access to the region inside the chassis structure. In some embodiments, controls 126-132 are mechanical switches. In some embodiments, controls 126-132 are electro-mechanical switches. In some embodiments, controls 126-132 are capacitive switches. The controls 126-132 may be coupled with EC 106.

Control 126 is for turning computer device 101 on or off. Control 128 is to signal the second switch state. For example, control 128 activates or initiates a process to isolate or disconnect battery 110 from components of computer device 101. Control 130 is to signal the first switch state. For example, control 130 is to activate or initiate a process to discharge battery 110. Control 132 is to signal a third switch state. For example, control 132 is to activate or initiate a battery maintenance mode.

In the third switch state, a battery maintenance function or operation is performed. The battery maintenance function can re-calibrate the battery 110 and adjust battery parameters. For example, maximum discharge rate, minimum discharge level, or maximum charge level may be adjusted. Control 132 can be used to signal the third switch state when the processor 102 is not fully powered up or prior to an operating system executing on the processor. Battery parameters read during the maintenance operation can be displayed at a later time when the processor 102 is fully powered up and computer device 101 and an operating system is operational.

Chassis structure 134 defines a region 138 in the interior of the structure. Battery 110 may be enclosed along with other components in the region 138 inside chassis structure 134. Chassis structure 134 may be designed for mobile use and to keep components in the internal region safe from an external environment, e.g., water resistant or water proof. In various embodiments, chassis 134 is designed to not be opened by an end user. Chassis structure 134 may be metal, and in some embodiments, include a portion that is made from glass. A special tool or tools may be necessary to open chassis 134 and access the inner region 138. An attempt to open chassis 134 without the special tool may damage the chassis 134 or one or more components. In various embodiments, battery 110 is not readily removable or replaceable by a user because of the difficulty of opening the chassis 134. In various embodiments, battery 110 is deemed or considered a "non-removable battery."

Computer device 101 comprises a number of components not shown in FIG. 1. These components are well known to one or ordinary skill in the art and omitted from the figure so as to not obscure the inventive concepts disclosed herein. These components comprise, for example, bus controllers, memory controllers, video controllers, audio controllers, network interfaces, transmitter/receiver devices, and graphics processors. In some embodiments, processor 102 comprises multiple processors. In some embodiments, computer device 101 comprises a system on a chip (SoC). Computer device 101 may include peripheral devices, such as input and output devices, e.g., keyboards, mice, microphones, cameras, touch pad, touch screens, scanners, displays, and speakers. Peripheral devices may also include memory and other devices. The foregoing is a non-exhaustive list of components that may be included in computer device 101.

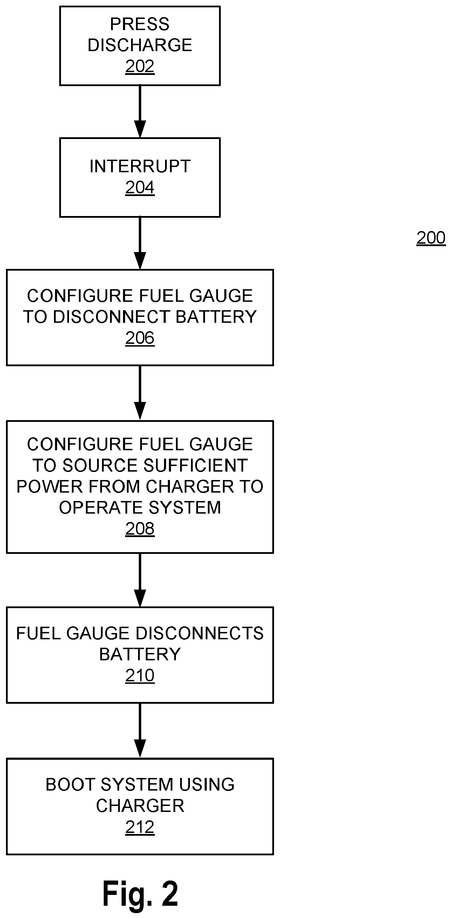

**FIG. 2** illustrates a flow diagram of a process 200 for discharging a battery according to various embodiments. The sequence of actions of flow diagram 200 here can be modified. For example, some actions or processes can be performed in parallel and some actions can be performed out of order. In some embodiments, an action or operation can be omitted, in whole or in part. In some embodiments, process 200 is implemented in hardware, software, or a combination of hardware and software. In some embodiments, process 200 is implemented by computer device 101. While various embodiments are described with reference to computer system 100, process 200 is applicable to any suitable computer system.

Referring to **FIG. 2,** at 202 a user activates disconnect control 128, e.g., presses a switch. Control 128 is to signal the second switch state. At 204, EC 106 detects the activation of disconnect control 128, and in some embodiments, the activation of disconnect control 128 triggers an interrupt to a processor within EC 106. The interrupt may be a high priority interrupt.

At 206, in response to detecting activation of disconnect control 128, EC 106 sends one or more signals to fuel gauge 112 to configure it. At 206, EC 106 sends a signal to fuel gauge 112 to configure it to control the switch circuitry 118 to decouple the battery 110 from the battery charger 114 and other components of computer device 101. At 206, EC 106 may send a signal to fuel gauge 112 that configures fuel gauge 112 to allow computer device 101 to boot up without using battery 110 as a power source. In other words, EC 106 may configure fuel gauge 112 to allow computer device 101 to boot up using only charger 114 while battery 110 is isolated from other components of computer device 101.

At 208, EC 106 sends a signal to fuel gauge 112 to configure it to control switch circuitry 118 to supply power to computer device 101 from the charger 114, and couple the battery charger 114 to other components of computer device 101. In addition, at 208, EC 106 may verify that charger 114 is connected to power source 116, e.g., it is plugged in, and the charger 114 is capable of providing power in a sufficient amount for the computer device 101 to boot up.

At 210, fuel gauge 112 performs operations according to the configuration made by EC 106. In particular, fuel gauge 112 may control switch circuitry to isolate battery 110 from the rest of the system. For example, fuel gauge 112 controls switch circuitry 118 to open switches S1 and S3. In addition, at 210, fuel gauge 112 controls switch circuitry 118 to supply power to computer device 101 from the charger 114. For example, fuel gauge 112 controls switch circuitry 118 to close switch S2, thereby coupling charger 114 with Vss.

With battery 110 isolated from other components of computer device 101 and power being supplied from charger 114, a user may wish to boot up computer device 101. At 212, computer device 101 boots up using power supplied by charger 114. In some embodiments, computer device 101 boots up in response detecting a user input, e.g., activation of on/off control 126. In some embodiments, computer device 101 automatically boots after operation 210.

Advantageously, process 200 may remove a dependency on battery 110 and allow computer device 101 to boot, thereby allowing a user to recovery from an erroneous battery situation. Once control 128 is switched back to a default position, EC 106 configures fuel gauge 112 to restore switch circuitry 118 to a default configuration, e.g., close switch S3. EC 106, in some embodiments, logs the number of times the user has used battery isolation process 200 and reports the number for use in battery maintenance operations.

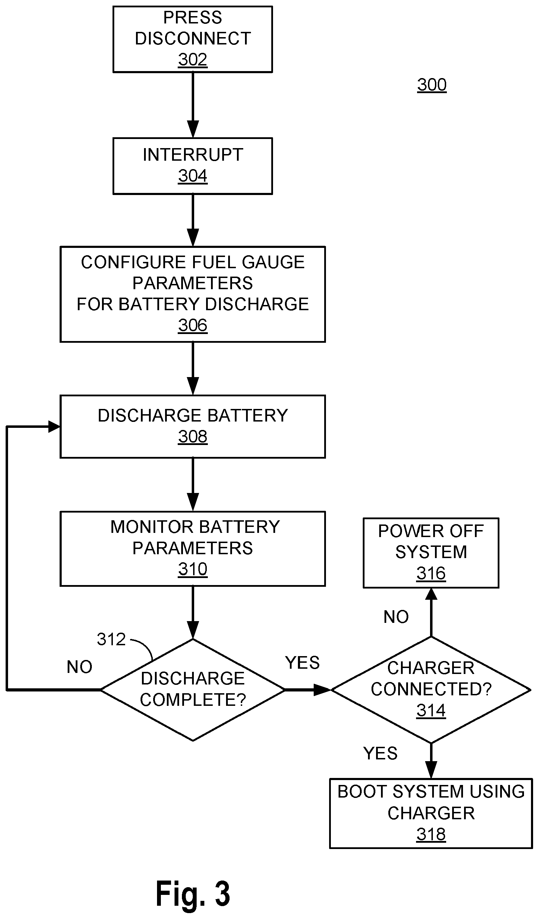

**FIG. 3** illustrates a flow diagram of a process 300 for disconnecting a battery according to various embodiments. The sequence of actions of flow diagram 300 here can be modified. For example, some actions or processes can be performed in parallel and some actions can be performed out of order. In some embodiments, an action or operation can be omitted, in whole or in part. In some embodiments, process 300 is implemented in hardware, software, or a combination of hardware and software. In some embodiments, process 300 is implemented by computer device 101. While various embodiments are described with reference to computer system 100, process 300 is applicable to any suitable computer system.

Referring to **FIG. 3,** at 302, a user activates, e.g., presses a switch, disconnect control 128. Control 130 is to signal the first switch state. At 304, EC 106 detects the activation of disconnect control 128, and in some embodiments, the activation of disconnect control 128 triggers an interrupt to a processor within EC 106. The interrupt may be a high priority interrupt.

At 306, in response to detecting activation of disconnect control 128, EC 106 sends one or more signals to fuel gauge 112 instructing it to configure parameters for battery discharge. For example, fuel gauge 112 is instructed to configure a maximum discharge rate or a minimum discharge level. At 308, fuel gauge 112 performs operations according to the configuration made by EC 106. In particular, fuel gauge 112 may control switch circuitry to discharge battery 110. For example, fuel gauge 112 controls switch circuitry 118 to open switch S1 and close switch S3, thereby de-coupling battery 110 from computer device 101 and coupling battery 110 with discharge circuitry. In various embodiments, discharge circuitry is display device 108. In some embodiments, fuel gauge 112 also controls switch circuitry 118 to close S2 so that charger 114 supplies power to Vss while battery 110 is being discharged.

At 310, EC 106 monitors battery parameters (also referred to as battery health parameters) while battery 110 is being discharged. In some embodiments, EC 106 reads battery parameters from fuel gauge 112. Example battery parameters include battery temperature, battery voltage (or charge level), current between the battery and the discharge circuit, and fuse data. At 312, EC 106 determines whether battery discharge is complete, e.g., when battery 110 reaches a predetermined battery voltage or charge level. For example, zero, five percent, or ten percent of a rated full charge level. The predetermined charge level will vary depending on the characteristics of a particular battery 110. If battery discharge is complete, process 300 may terminate or, in some embodiments, proceed to operation 314.

At 314, it is determined whether charger 114 is connected and capable of supplying power at sufficient level for the computer device 101 to boot up. If charger 114 is not connected and not supplying sufficient power, computer system is powered off at 316. If charger 114 is connected and supplying sufficient power, computer system is booted used power from the charger at 318.

Process 300 may provide an advantage in a computer system where the battery is malfunctioning, and this malfunctioning is, in turn, preventing the system from booting up. If a malfunctioning battery is preventing the system from booting, there may be known no way to discharge a non-removable battery using the computer system as a load. However, process 300 way to discharge a battery without removing it, using the computer system as a load. In addition, to allowing the system to boot, discharging the battery may help the battery return to a functional state.

One example of a "discharge circuit" is display device 108. Display devices typically require a relatively more power than other components of a computer system. However, in other embodiments, any other suitable components of a computer system may be employed as a discharge circuit in lieu of or in addition to a display device. For example, in an embodiment, the discharge circuit may be a combination of a display device and a processor executing instructions. In another embodiment, the discharge circuit may be a processor executing instructions. In yet another embodiment, the discharge circuit may be a peripheral device connected to, but external to the computer system, such as an external monitor, a storage device, or a USB device.

Elements of embodiments (e.g., flowchart with reference to **FIG. 3****)** are also provided as a machine-readable medium (e.g., non-volatile memory 105 for storing the computer-executable instructions (e.g., instructions to implement any other processes discussed herein). In some embodiments, a computing platform comprises memory, a processor, machine-readable storage media (also referred to as tangible machine-readable medium), a communication interface (e.g., wireless or wired interface), and a network bus coupled together.

In some embodiments, the various logic blocks are coupled together via a Network Bus. Any suitable protocol may be used to implement the network bus. In some embodiments, machine-readable storage medium includes instructions (also referred to as the program software code/instructions) for calculating or measuring distance and relative orientation of a device with reference to another device as described with reference to various embodiments and flowchart.

Program software code/instructions associated with the sequence diagram of **FIG. 2** or the flow diagram of **FIG. 3** (and/or various embodiments) and executed to implement embodiments of the disclosed subject matter may be implemented as part of an operating system or a specific application, component, program, object, module, routine, or other sequence of instructions or organization of sequences of instructions referred to as "program software code/instructions," "operating system program software code/instructions," "application program software code/instructions," or simply "software" or firmware embedded in processor. In some embodiments, the program software code/instructions associated with the sequence flow diagrams of **FIG. 2** and **FIG. 3** (and/or various embodiments) are executed by the system or one or more components thereof.

In some embodiments, the program software code/instructions associated with reference to **FIG. 2** and **FIG. 3** (and/or various embodiments) are stored in a computer executable storage medium and executed by the processor. Here, computer executable storage medium is a tangible machine-readable medium that can be used to store program software code/instructions and data that, when executed by a computing device, causes one or more processors to perform a method(s) as may be recited in one or more accompanying claims directed to the disclosed subject matter.

The tangible machine-readable medium may include storage of the executable software program code/instructions and data in various tangible locations, including for example ROM, volatile RAM, non-volatile memory and/or cache and/or other tangible memory as referenced in the present application. Portions of this program software code/instructions and/or data may be stored in any one of these storage and memory devices. Further, the program software code/instructions can be obtained from other storage, including, e.g., through centralized servers or peer to peer networks and the like, including the Internet. Different portions of the software program code/instructions and data can be obtained at different times and in different communication sessions or in the same communication session.

The software program code/instructions (associated with reference to **FIG. 2** and **FIG. 3** and other embodiments) and data can be obtained in their entirety prior to the execution of a respective software program or application by the computing device. Alternatively, portions of the software program code/instructions and data can be obtained dynamically, e.g., just in time, when needed for execution. Alternatively, some combination of these ways of obtaining the software program code/instructions and data may occur, e.g., for different applications, components, programs, objects, modules, routines or other sequences of instructions or organization of sequences of instructions, by way of example. Thus, it is not required that the data and instructions be on a tangible machine readable medium in entirety at a particular instance of time.

Examples of tangible computer-readable media include but are not limited to recordable and non-recordable type media such as volatile and non-volatile memory devices, read only memory (ROM), random access memory (RAM), flash memory devices, floppy and other removable disks, magnetic storage media, optical storage media (e.g., Compact Disk Read-Only Memory (CD ROMS), Digital Versatile Disks (DVDs), etc.), ferroelectric memory, resistive RAM, phase change memory (PCM), magnetic RAM (MRAM, among others. The software program code/instructions may be temporarily stored in digital tangible communication links while implementing electrical, optical, acoustical or other forms of propagating signals, such as carrier waves, infrared signals, digital signals, etc. through such tangible communication links.

In general, tangible machine readable medium includes any tangible mechanism that provides (i.e., stores and/or transmits in digital form, e.g., data packets) information in a form accessible by a machine (i.e., a computing device), which may be included, e.g., in a communication device, a computing device, a network device, a personal digital assistant, a manufacturing tool, a mobile communication device, whether or not able to download and run applications and subsidized applications from the communication network, such as the Internet, e.g., an iPhone^{®}, Galaxy^{®}, or the like, or any other device including a computing device. In one embodiment, processor-based system is in a form of or included within a PDA (personal digital assistant), a cellular phone, a notebook computer, a tablet, a game console, a set top box, an embedded system, a TV (television), a personal desktop computer, etc. Alternatively, the traditional communication applications and subsidized application(s) may be used in some embodiments of the disclosed subject matter.

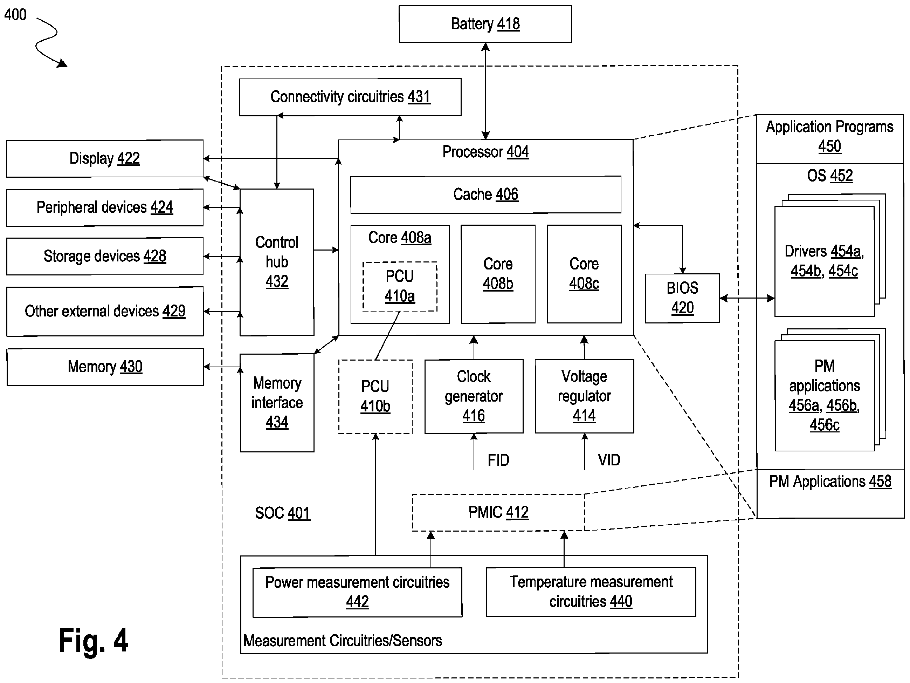

**FIG. 4** illustrates a computer system or computing device 400 (also referred to as device 400), where the computer device has a capability to isolate and discharge a battery, in accordance with some embodiments. It is pointed out that those elements of **FIG. 4** having the same reference numbers (or names) as the elements of any other figure can operate or function in any manner similar to that described, but are not limited to such.

In some embodiments, device 400 represents an appropriate computing device, such as a computing tablet, a mobile phone or smart-phone, a laptop, a desktop, an Internet-of-Things (IOT) device, a server, a wearable device, a set-top box, a wireless-enabled e-reader, or the like. It will be understood that certain components are shown generally, and not all components of such a device are shown in device 400.

In an example, the device 400 comprises a SoC (System-on-Chip) 401. An example boundary of the SOC 401 is illustrated using dotted lines in **FIG. 4****,** with some example components being illustrated to be included within SOC 401 - however, SOC 401 may include any appropriate components of device 400.

In some embodiments, device 400 includes processor 404. Processor 404 can include one or more physical devices, such as microprocessors, application processors, microcontrollers, programmable logic devices, processing cores, or other processing means. The processing operations performed by processor 404 include the execution of an operating platform or operating system on which applications and/or device functions are executed. The processing operations include operations related to I/O (input/output) with a human user or with other devices, operations related to power management, operations related to connecting computing device 400 to another device, and/or the like. The processing operations may also include operations related to audio I/O and/or display I/O.

In some embodiments, processor 404 includes multiple processing cores (also referred to as cores) 408a, 408b, 408c. Although merely three cores 408a, 408b, 408c are illustrated in **FIG. 4****,** the processor 404 may include any other appropriate number of processing cores, e.g., tens, or even hundreds of processing cores. Processor cores 408a, 408b, 408c may be implemented on a single integrated circuit (IC) chip. Moreover, the chip may include one or more shared and/or private caches, buses or interconnections, graphics and/or memory controllers, or other components.

In some embodiments, processor 404 includes cache 406. In an example, sections of cache 406 may be dedicated to individual cores 408 (e.g., a first section of cache 406 dedicated to core 408a, a second section of cache 406 dedicated to core 408b, and so on). In an example, one or more sections of cache 406 may be shared among two or more of cores 408. Cache 406 may be split in different levels, e.g., level 1 (L1) cache, level 2 (L2) cache, level 3 (L3) cache, etc.

In some embodiments, a given processor core (e.g., core 408a) may include a fetch unit to fetch instructions (including instructions with conditional branches) for execution by the core 408a. The instructions may be fetched from any storage devices such as the memory 430. Processor core 408a may also include a decode unit to decode the fetched instruction. For example, the decode unit may decode the fetched instruction into a plurality of micro-operations. Processor core 408a may include a schedule unit to perform various operations associated with storing decoded instructions. For example, the schedule unit may hold data from the decode unit until the instructions are ready for dispatch, e.g., until all source values of a decoded instruction become available. In one embodiment, the schedule unit may schedule and/or issue (or dispatch) decoded instructions to an execution unit for execution.

The execution unit may execute the dispatched instructions after they are decoded (e.g., by the decode unit) and dispatched (e.g., by the schedule unit). In an embodiment, the execution unit may include more than one execution unit (such as an imaging computational unit, a graphics computational unit, a generalpurpose computational unit, etc.). The execution unit may also perform various arithmetic operations such as addition, subtraction, multiplication, and/or division, and may include one or more an arithmetic logic units (ALUs). In an embodiment, a co-processor (not shown) may perform various arithmetic operations in conjunction with the execution unit.

Further, an execution unit may execute instructions out-of-order. Hence, processor core 408a (for example) may be an out-of-order processor core in one embodiment. Processor core 408a may also include a retirement unit. The retirement unit may retire executed instructions after they are committed. In an embodiment, retirement of the executed instructions may result in processor state being committed from the execution of the instructions, physical registers used by the instructions being de-allocated, etc. The processor core 408a may also include a bus unit to enable communication between components of the processor core 408a and other components via one or more buses. Processor core 408a may also include one or more registers to store data accessed by various components of the core 408a (such as values related to assigned app priorities and/or sub-system states (modes) association.

In some embodiments, device 400 comprises connectivity circuitries 431. For example, connectivity circuitries 431 includes hardware devices (e.g., wireless and/or wired connectors and communication hardware) and/or software components (e.g., drivers, protocol stacks), e.g., to enable device 400 to communicate with external devices. Device 400 may be separate from the external devices, such as other computing devices, wireless access points or base stations, etc.

In an example, connectivity circuitries 431 may include multiple different types of connectivity. To generalize, the connectivity circuitries 431 may include cellular connectivity circuitries, wireless connectivity circuitries, etc. Cellular connectivity circuitries of connectivity circuitries 431 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, 3rd Generation Partnership Project (3GPP) Universal Mobile Telecommunications Systems (UMTS) system or variations or derivatives, 3GPP Long-Term Evolution (LTE) system or variations or derivatives, 3GPP LTE-Advanced (LTE-A) system or variations or derivatives, Fifth Generation (5G) wireless system or variations or derivatives, 5G mobile networks system or variations or derivatives, 5G New Radio (NR) system or variations or derivatives, or other cellular service standards. Wireless connectivity circuitries (or wireless interface) of the connectivity circuitries 431 refers to wireless connectivity that is not cellular, and can include personal area networks (such as Bluetooth, Near Field, etc.), local area networks (such as Wi-Fi), and/or wide area networks (such as WiMax), and/or other wireless communication. In an example, connectivity circuitries 431 may include a network interface, such as a wired or wireless interface, e.g., so that a system embodiment may be incorporated into a wireless device, for example, cell phone or personal digital assistant.

In some embodiments, device 400 comprises control hub 432, which represents hardware devices and/or software components related to interaction with one or more I/O devices. For example, processor 404 may communicate with one or more of display 422, one or more peripheral devices 424, storage devices 428, one or more other external devices 429, etc., via control hub 432. Control hub 432 may be a chipset, a Platform Control Hub (PCH), and/or the like.

For example, control hub 432 illustrates one or more connection points for additional devices that connect to device 400, e.g., through which a user might interact with the system. For example, devices (e.g., devices 429) that can be attached to device 400 include microphone devices, speaker or stereo systems, audio devices, video systems or other display devices, keyboard or keypad devices, or other I/O devices for use with specific applications such as card readers or other devices.

As mentioned above, control hub 432 can interact with audio devices, display 422, etc. For example, input through a microphone or other audio device can provide input or commands for one or more applications or functions of device 400. Additionally, audio output can be provided instead of, or in addition to display output. In another example, if display 422 includes a touch screen, display 422 also acts as an input device, which can be at least partially managed by control hub 432. There can also be additional buttons or switches on computing device 400 to provide I/O functions managed by control hub 432. In one embodiment, control hub 432 manages devices such as accelerometers, cameras, light sensors or other environmental sensors, or other hardware that can be included in device 400. The input can be part of direct user interaction, as well as providing environmental input to the system to influence its operations (such as filtering for noise, adjusting displays for brightness detection, applying a flash for a camera, or other features).

In some embodiments, control hub 432 may couple to various devices using any appropriate communication protocol, e.g., PCIe (Peripheral Component Interconnect Express), USB (Universal Serial Bus), Thunderbolt, High Definition Multimedia Interface (HDMI), Firewire, etc.

In some embodiments, display 422 represents hardware (e.g., display devices) and software (e.g., drivers) components that provide a visual and/or tactile display for a user to interact with device 400. Display 422 may include a display interface, a display screen, and/or hardware device used to provide a display to a user. In some embodiments, display 422 includes a touch screen (or touch pad) device that provides both output and input to a user. In an example, display 422 may communicate directly with the processor 404. Display 422 can be one or more of an internal display device, as in a mobile electronic device or a laptop device or an external display device attached via a display interface (e.g., DisplayPort, etc.). In one embodiment display 422 can be a head mounted display (HMD) such as a stereoscopic display device for use in virtual reality (VR) applications or augmented reality (AR) applications.

In some embodiments and although not illustrated in the figure, in addition to (or instead of) processor 404, device 400 may include Graphics Processing Unit (GPU) comprising one or more graphics processing cores, which may control one or more aspects of displaying contents on display 422.

Control hub 432 (or platform controller hub) may include hardware interfaces and connectors, as well as software components (e.g., drivers, protocol stacks) to make peripheral connections, e.g., to peripheral devices 424.

It will be understood that device 400 could both be a peripheral device to other computing devices, as well as have peripheral devices connected to it. Device 400 may have a "docking" connector to connect to other computing devices for purposes such as managing (e.g., downloading and/or uploading, changing, synchronizing) content on device 400. Additionally, a docking connector can allow device 400 to connect to certain peripherals that allow computing device 400 to control content output, for example, to audiovisual or other systems.

In addition to a proprietary docking connector or other proprietary connection hardware, device 400 can make peripheral connections via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

In some embodiments, connectivity circuitries 431 may be coupled to control hub 432, e.g., in addition to, or instead of, being coupled directly to the processor 404. In some embodiments, display 422 may be coupled to control hub 432, e.g., in addition to, or instead of, being coupled directly to processor 404.

In some embodiments, device 400 comprises memory 430 coupled to processor 404 via memory interface 434. Memory 430 includes memory devices for storing information in device 400. Memory can include nonvolatile (state does not change if power to the memory device is interrupted) and/or volatile (state is indeterminate if power to the memory device is interrupted) memory devices. Memory device 430 can be a dynamic random access memory (DRAM) device, a static random access memory (SRAM) device, flash memory device, phase-change memory device, or some other memory device having suitable performance to serve as process memory. In one embodiment, memory 430 can operate as system memory for device 400, to store data and instructions for use when the one or more processors 404 executes an application or process. Memory 430 can store application data, user data, music, photos, documents, or other data, as well as system data (whether long-term or temporary) related to the execution of the applications and functions of device 400.

Elements of various embodiments and examples are also provided as a machine-readable medium (e.g., memory 430) for storing the computer-executable instructions (e.g., instructions to implement any other processes discussed herein). The machine-readable medium (e.g., memory 430) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

In some embodiments, device 400 comprises temperature measurement circuitries 440, e.g., for measuring temperature of various components of device 400. In an example, temperature measurement circuitries 440 may be embedded, or coupled or attached to various components, whose temperature are to be measured and monitored. For example, temperature measurement circuitries 440 may measure temperature of (or within) one or more of cores 408a, 408b, 408c, voltage regulator 414, memory 430, a mother-board of SOC 401, and/or any appropriate component of device 400.

In some embodiments, device 400 comprises power measurement circuitries 442, e.g., for measuring power consumed by one or more components of the device 400. In an example, in addition to, or instead of, measuring power, the power measurement circuitries 442 may measure voltage and/or current. In an example, the power measurement circuitries 442 may be embedded, or coupled or attached to various components, whose power, voltage, and/or current consumption are to be measured and monitored. For example, power measurement circuitries 442 may measure power, current and/or voltage supplied by one or more voltage regulators 414, power supplied to SOC 401, power supplied to device 400, power consumed by processor 404 (or any other component) of device 400, etc.

In some embodiments, device 400 comprises one or more voltage regulator circuitries, generally referred to as voltage regulator (VR) 414. VR 414 generates signals at appropriate voltage levels, which may be supplied to operate any appropriate components of the device 400. Merely as an example, VR 414 is illustrated to be supplying signals to processor 404 of device 400. In some embodiments, VR 414 receives one or more Voltage Identification (VID) signals, and generates the voltage signal at an appropriate level, based on the VID signals. Various type of VRs may be utilized for the VR 414. For example, VR 414 may include a "buck" VR, "boost" VR, a combination of buck and boost VRs, low dropout (LDO) regulators, switching DC-DC regulators, etc. Buck VR is generally used in power delivery applications in which an input voltage needs to be transformed to an output voltage in a ratio that is smaller than unity. Boost VR is generally used in power delivery applications in which an input voltage needs to be transformed to an output voltage in a ratio that is larger than unity. In some embodiments, each processor core has its own VR which is controlled by PCU 410a/b and/or PMIC 412. In some embodiments, each core has a network of distributed LDOs to provide efficient control for power management. The LDOs can be digital, analog, or a combination of digital or analog LDOs.

In some embodiments, device 400 comprises one or more clock generator circuitries, generally referred to as clock generator 416. Clock generator 416 generates clock signals at appropriate frequency levels, which may be supplied to any appropriate components of device 400. Merely as an example, clock generator 416 is illustrated to be supplying clock signals to processor 404 of device 400. In some embodiments, clock generator 416 receives one or more Frequency Identification (FID) signals, and generates the clock signals at an appropriate frequency, based on the FID signals.

In some embodiments, device 400 comprises battery 418 supplying power to various components of device 400. Merely as an example, battery 418 is illustrated to be supplying power to processor 404. Although not illustrated in the figures, device 400 may comprise a charging circuitry, e.g., to recharge the battery, based on Alternating Current (AC) power supply received from an AC adapter.

In some embodiments, device 400 comprises Power Control Unit (PCU) 410 (also referred to as Power Management Unit (PMU), Power Controller, etc.). In an example, some sections of PCU 410 may be implemented by one or more processing cores 408, and these sections of PCU 410 are symbolically illustrated using a dotted box and labelled PCU 410a. In an example, some other sections of PCU 410 may be implemented outside the processing cores 408, and these sections of PCU 410 are symbolically illustrated using a dotted box and labelled as PCU 410b. PCU 410 may implement various power management operations for device 400. PCU 410 may include hardware interfaces, hardware circuitries, connectors, registers, etc., as well as software components (e.g., drivers, protocol stacks), to implement various power management operations for device 400.

In some embodiments, device 400 comprises Power Management Integrated Circuit (PMIC) 412, e.g., to implement various power management operations for device 400. In some embodiments, PMIC 412 is a Reconfigurable Power Management ICs (RPMICs) and/or an IMVP (Intel^{®} Mobile Voltage Positioning). In an example, the PMIC is within an IC chip separate from processor 404. The PMIC 412 may implement various power management operations for device 400. PMIC 412 may include hardware interfaces, hardware circuitries, connectors, registers, etc., as well as software components (e.g., drivers, protocol stacks), to implement various power management operations for device 400.

In an example, device 400 comprises one or both PCU 410 or PMIC 412. In an example, any one of PCU 410 or PMIC 412 may be absent in device 400, and hence, these components are illustrated using dotted lines.

Various power management operations of device 400 may be performed by PCU 410, by PMIC 412, or by a combination of PCU 410 and PMIC 412. For example, PCU 410 and/or PMIC 412 may select a power state (e.g., P-state) for various components of device 400. For example, PCU 410 and/or PMIC 412 may select a power state (e.g., in accordance with the ACPI (Advanced Configuration and Power Interface) specification) for various components of device 400. Merely as an example, PCU 410 and/or PMIC 412 may cause various components of the device 400 to transition to a sleep state, to an active state, to an appropriate C state (e.g., C0 state, or another appropriate C state, in accordance with the ACPI specification), etc. In an example, PCU 410 and/or PMIC 412 may control a voltage output by VR 414 and/or a frequency of a clock signal output by the clock generator, e.g., by outputting the VID signal and/or the FID signal, respectively. In an example, PCU 410 and/or PMIC 412 may control battery power usage, charging of battery 418, and features related to power saving operation.

The clock generator 416 can comprise a phase locked loop (PLL), frequency locked loop (FLL), or any suitable clock source. In some embodiments, each core of processor 404 has its own clock source. As such, each core can operate at a frequency independent of the frequency of operation of the other core. In some embodiments, PCU 410 and/or PMIC 412 performs adaptive or dynamic frequency scaling or adjustment. For example, clock frequency of a processor core can be increased if the core is not operating at its maximum power consumption threshold or limit. In some embodiments, PCU 410 and/or PMIC 412 determines the operating condition of each core of a processor, and opportunistically adjusts frequency and/or power supply voltage of that core without the core clocking source (e.g., PLL of that core) losing lock when the PCU 410 and/or PMIC 412 determines that the core is operating below a target performance level. For example, if a core is drawing current from a power supply rail less than a total current allocated for that core or processor 404, then PCU 410 and/or PMIC 412 can temporarily increase the power draw for that core or processor 404 (e.g., by increasing clock frequency and/or power supply voltage level) so that the core or processor 404 can perform at a higher performance level. As such, voltage and/or frequency can be increased temporality for processor 404 without violating product reliability.

In an example, PCU 410 and/or PMIC 412 may perform power management operations, e.g., based at least in part on receiving measurements from power measurement circuitries 442, temperature measurement circuitries 440, charge level of battery 418, and/or any other appropriate information that may be used for power management. To that end, PMIC 412 is communicatively coupled to one or more sensors to sense/detect various values/variations in one or more factors having an effect on power/thermal behavior of the system/platform. Examples of the one or more factors include electrical current, voltage droop, temperature, operating frequency, operating voltage, power consumption, inter-core communication activity, etc. One or more of these sensors may be provided in physical proximity (and/or thermal contact/coupling) with one or more components or logic/IP blocks of a computing system. Additionally, sensor(s) may be directly coupled to PCU 410 and/or PMIC 412 in at least one embodiment to allow PCU 410 and/or PMIC 412 to manage processor core energy at least in part based on value(s) detected by one or more of the sensors.

Also illustrated is an example software stack of device 400 (although not all elements of the software stack are illustrated). Merely as an example, processors 404 may execute application programs 450, Operating System 452, one or more Power Management (PM) specific application programs (e.g., generically referred to as PM applications 458), and/or the like. PM applications 458 may also be executed by the PCU 410 and/or PMIC 412. OS 452 may also include one or more PM applications 456a, 456b, 456c. The OS 452 may also include various drivers 454a, 454b, 454c, etc., some of which may be specific for power management purposes. In some embodiments, device 400 may further comprise a Basic Input/Output System (BIOS) 420. BIOS 420 may communicate with OS 452 (e.g., via one or more drivers 454), communicate with processors 404, etc.

For example, one or more of PM applications 458, 456, drivers 454, BIOS 420, etc. may be used to implement power management specific tasks, e.g., to control voltage and/or frequency of various components of device 400, to control wake-up state, sleep state, and/or any other appropriate power state of various components of device 400, control battery power usage, charging of the battery 418, features related to power saving operation, etc.

According to various embodiments, device 400 includes a chassis structure extending around a region. The battery 418 is within the region. The device 400 includes charger circuitry to provide a charge to the battery and discharge circuitry to receive a charge from the battery. In addition, switch circuitry is coupled between the battery 418 and each of the charger circuitry, the discharge circuitry, and a load. In some embodiments, power management circuitries 442 include the charger circuitry, the discharge circuitry, the switching circuitry. The chassis structure includes a connector at an exterior surface. The connector serves to couple device 400 to a power supply, wherein the switch circuitry is coupled via the connector to the charger circuitry. A first mechanical switch is disposed at the exterior surface of the chassis structure. The first mechanical switch is to generate, in response to an activation of the first mechanical switch, a first control signal to request a first switch state wherein the battery is electrically coupled to the discharge circuitry. Device 400 also includes a controller circuit coupled to receive the first control signal from the first mechanical switch and, based on the first control signal, to operate the switch circuitry to provide the first switch state. In some embodiments, the controller is PCU 410.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

The following examples pertain to further embodiments, and may be combined in any combination. Specifics in the examples may be used anywhere in one or more embodiments. All optional features of the apparatus described herein may also be implemented with respect to a method or process. The examples can be combined in any combinations. For example, example 4 can be combined with example 2.

Example 1: An apparatus comprising: a chassis structure which extends around a region; charger circuitry to provide a charge to a battery within the region; discharge circuitry to receive a charge from the battery; switch circuitry coupled between the battery and each of the charger circuitry, the discharge circuitry, and a load; a connector at an exterior surface of the chassis structure, the connector to couple the apparatus to a power supply, wherein the switch circuitry is coupled to the connector via the charger circuitry; a first control activable at the exterior surface of the chassis structure, the first control to generate, in response to an activation of the first control, a first control signal to request a first switch state wherein the battery is electrically coupled to the discharge circuitry; and a controller circuit coupled to receive the first control signal from the first control and, based on the first control signal, to operate the switch circuitry to provide the first switch state.

Example 2: The apparatus of example 1, further comprising a second control at the exterior surface of the chassis structure, the second control to generate, in response to an activation of the second control, a second control signal to request a second switch state wherein the battery is electrically decoupled from the charger circuitry while the connector is electrically coupled to the load via the charger circuitry and the switch circuitry.

Example 3: The apparatus of example 2, further comprising a third control at the exterior surface of the chassis structure, the third control to generate, in response to an activation of the third control, a third control signal to request a calibration of the battery; wherein the controller circuit is further coupled to receive the third control signal from the third control and, based on the third control signal, to perform the calibration.

Example 4: The apparatus of example 1, further comprising a third control at the exterior surface of the chassis structure, the third control to generate, in response to an activation of the third control, a third control signal to request a calibration of the battery; wherein the controller circuit is further coupled to receive the third control signal from the third control and, based on the third control signal, to perform the calibration.

Example 5: The apparatus of example 1, wherein the discharge circuitry comprises a display device.

Example 6: The apparatus of example 1, wherein the controller circuit configures one or more battery discharge parameters.

Example 7: The apparatus of example 1, wherein the one or more battery discharge parameters include one or more of a maximum current between the battery and the discharge circuitry, and a minimum charge level of the battery.

Example 8: The apparatus of example 1, wherein the controller circuit monitors one or more battery health parameters during a time period while switch circuitry provides the first switch state, wherein the battery health parameters comprise one or more of battery temperature, battery voltage, current between the battery and the discharge circuit, and fuse data.

Example 9: An apparatus comprising: a chassis structure which extends around a region; discharge circuitry to receive a charge from a battery; switch circuitry coupled between the battery and each of the discharge circuitry, and a load; a connector accessible at an exterior surface of the chassis structure, the connector to couple the apparatus to a power supply, wherein the switch circuitry is coupled to the connector via the charger circuitry; a first control at the exterior surface of the chassis structure, the first control to generate, in response to an activation of the first control, a first control signal to request a first switch state wherein the battery is electrically coupled to the discharge circuitry; and a controller circuit coupled to receive the first control signal from the first control and, based on the first control signal, to operate the switch circuitry to provide the first switch state.

Example 10: The apparatus of example 9, further comprising: charger circuitry to provide a charge to a battery within the region, wherein the switch circuitry is coupled between the battery and each of the charger circuitry, the discharge circuitry, and the load; a second control at the exterior surface of the chassis structure, the second control to generate, in response to an activation of the second control, a second control signal to request a second switch state wherein the battery is electrically decoupled from the charger circuitry while the connector is electrically coupled to the load via the charger circuitry and the switch circuitry.

Example 11: The apparatus of example 10, further comprising a third control at the exterior surface of the chassis structure, the third control to generate, in response to an activation of the third control, a third control signal to request a calibration of the battery; wherein the controller circuit is further coupled to receive the third control signal from the third control and, based on the third control signal, to perform the calibration.

Example 12: The apparatus of example 9, further comprising a third control at the exterior surface of the chassis structure, the third control to generate, in response to an activation of the third control, a third control signal to request a calibration of the battery; wherein the controller circuit is further coupled to receive the third control signal from the third control and, based on the third control signal, to perform the calibration.

Example 13: The apparatus of example 9, wherein the discharge circuitry comprises a display device.

Example 14: The apparatus of example 9, wherein the controller circuit configures one or more battery discharge parameters, wherein the one or more battery discharge parameters include one or more of a maximum current between the battery and the discharge circuitry, and a minimum charge level of the battery.

Example 15: A system comprising: a processor, a memory, and a chassis structure extending around a region; charger circuitry to provide a charge to a battery within the region; discharge circuitry to receive a charge from the battery; switch circuitry coupled between the battery and each of the charger circuitry, the discharge circuitry, and a load; a connector at an exterior surface of the chassis structure, the connector to couple the apparatus to a power supply, wherein the switch circuitry is coupled to the connector via the charger circuitry; a first control activable at the exterior surface of the chassis structure, the first control to generate, in response to an activation of the first control, a first control signal to request a first switch state wherein the battery is electrically coupled to the discharge circuitry; and a controller circuit coupled to receive the first control signal from the first control and, based on the first control signal, to operate the switch circuitry to provide the first switch state.

Example 16: The system of example 15, further comprising a second control at the exterior surface of the chassis structure, the second control to generate, in response to an activation of the second control, a second control signal to request a second switch state wherein the battery is electrically decoupled from the charger circuitry while the connector is electrically coupled to the load via the charger circuitry and the switch circuitry.

Example 17: The system of example 16, further comprising a third control at the exterior surface of the chassis structure, the third control to generate, in response to an activation of the third control, a third control signal to request a calibration of the battery; wherein the controller circuit is further coupled to receive the third control signal from the third control and, based on the third control signal, to perform the calibration.

Example 18: The system of example 15, further comprising a third control at the exterior surface of the chassis structure, the third control to generate, in response to an activation of the third control, a third control signal to request a calibration of the battery; wherein the controller circuit is further coupled to receive the third control signal from the third control and, based on the third control signal, to perform the calibration.

Example 19: The system of example 15, wherein the discharge circuitry comprises a display device.

Example 20: The system of example 15, wherein the controller circuit monitors one or more battery health parameters during a time period while switch circuitry provides the first switch state, wherein the battery health parameters comprise one or more of battery temperature, battery voltage, current between the battery and the discharge circuit, and fuse data.

An abstract is provided that will allow the reader to ascertain the nature and gist of the technical disclosure. The abstract is submitted with the understanding that it will not be used to limit the scope or meaning of the claims. The following claims are hereby incorporated into the detailed description, with each claim standing on its own as a separate embodiment.

## Claims

1. An apparatus comprising:
a chassis structure which extends around a region;
charger circuitry to provide a charge to a battery within the region;
discharge circuitry to receive a charge from the battery;
switch circuitry coupled between the battery and each of the charger circuitry, the discharge circuitry, and a load;
a connector at an exterior surface of the chassis structure, the connector to couple the apparatus to a power supply, wherein the switch circuitry is coupled to the connector via the charger circuitry;
a first control activable at the exterior surface of the chassis structure, the first control to generate, in response to an activation of the first control, a first control signal to request a first switch state wherein the battery is electrically coupled to the discharge circuitry; and
a controller circuit coupled to receive the first control signal from the first control and, based on the first control signal, to operate the switch circuitry to provide the first switch state.

2. The apparatus of claim 1, further comprising a second control at the exterior surface of the chassis structure, the second control to generate, in response to an activation of the second control, a second control signal to request a second switch state wherein the battery is electrically decoupled from the charger circuitry while the connector is electrically coupled to the load via the charger circuitry and the switch circuitry.

3. The apparatus of claim 2, further comprising a third control at the exterior surface of the chassis structure, the third control to generate, in response to an activation of the third control, a third control signal to request a calibration of the battery;
wherein the controller circuit is further coupled to receive the third control signal from the third control and, based on the third control signal, to perform the calibration.

4. The apparatus of any of claims 1 to 3, further comprising a third control at the exterior surface of the chassis structure, the third control to generate, in response to an activation of the third control, a third control signal to request a calibration of the battery;
wherein the controller circuit is further coupled to receive the third control signal from the third control and, based on the third control signal, to perform the calibration.

5. The apparatus of any of claims 1 to 4, wherein the discharge circuitry comprises a display device.

6. The apparatus of any of claims 1 to 5, wherein the controller circuit configures one or more battery discharge parameters.

7. The apparatus of any of claims 1 to 6, wherein the one or more battery discharge parameters include one or more of a maximum current between the battery and the discharge circuitry, and a minimum charge level of the battery.

8. The apparatus of any of claims 1 to 7, wherein the controller circuit monitors one or more battery health parameters during a time period while switch circuitry provides the first switch state, wherein the battery health parameters comprise one or more of battery temperature, battery voltage, current between the battery and the discharge circuit, and fuse data.
